# EUROPÄISCHE PATENTANMELDUNG

(11) **EP 1 563 912 A2**
(43) Veröffentlichungstag der Anmeldung: **17.08.2005**
(21) Anmeldenummer: 05000031.4
(22) Anmeldetag: 04.01.2005
(51) Int. Cl.: B05B 1/20, B05B 15/00

(54) **Spritzvorrichtung**

(30) Priorität: 06.02.2004 DE 102004006039
(71) Anmelder: Bergmann, Hermann, 49722 Haren/Ems (DE)
(72) Erfinder: Bergmann, Hermann, 49722 Haren/Ems (DE)
(74) Vertreter: Habbel, Hans-Georg, Dipl.-Ing.

(57) **Zusammenfassung**

Die Erfindung bezieht sich auf eine Spritzvorrichtung, z. B. Feldspritze für landwirtschaftliche Einsatzzwecke mit einem von einer Tragvorrichtung getragenen Spritzgestänge und einem elastischen Druckschlauch (2), der fest von einer Blattfeder (1) getragen wird, die im Ruhezustand aufgerollt auf der Tragvorrichtung angeordnet ist, wobei ein Druckerzeuger vorgesehen wird, der das Druckschlauchinnere (3) unter Druck setzen kann und derart den Druckschlauch (2) und damit die Blattfeder entrollt.

## Beschreibung

Die Erfindung bezieht sich auf eine Spritzvorrichtung gemäß dem Oberbegriff des Hauptanspruches.

Feldspritzen bestehen im wesentlichen aus einer Tragvorrichtung, auf der ein Flüssigkeitstank, Pumpen und das Spritzgestänge angeordnet ist. Diese Tragvorrichtung kann ein gesondertes Bauteil sein, kann aber auch ein Bauteil sein, das unmittelbar von der landwirtschaftlichen Zugmaschine getragen und betätigt wird. Eine Feldspritze soll möglichst leicht sein, um einerseits viel Flüssigkeit mitnehmen zu können, andererseits den Bodendruck möglichst gering zu halten. Gleichzeitig soll aber eine möglichst breite Fläche besprüht werden, damit wenig Fahrspuren im Feld entstehen. Dies sind alles Forderungen, die sich teilweise widersprechen.

Um diesen Forderungen gerecht zu werden, hat man bisher riesige Rohrkonstruktionen gebaut, die teilweise hydraulisch ausfaltbar oder ausfahrbar sind und die eine Spritzbreite von 36 - 48 m bearbeiten können. Auf öffentlichen Straßen sollte die Gesamtvorrichtung auf eine Gesamtbreite von 2,5 m einklappbar sein, woraus ersichtlich ist, daß das Spritzgestänge aus einem außerordentlich komplizierten Gerätebauteil besteht.

Der Erfindung liegt die Aufgabe zugrunde, diese Gestängekonstruktion, wie sie bisher im Stand der Technik bekannt und üblich ist, zu vermeiden.

Gelöst wird diese Aufgabe durch die Lehre des kennzeichnenden Teiles des Hauptanspruches, d. h. es wird einerseits eine aufgerollte Blattfeder vorgeschlagen, auf der fest ein Druckschlauch angeordnet ist, wobei dieser Druckschlauch auf der Oberseite der Blattfeder aufvulkanisiert sein kann, so daß hier eine unlösbare feste Verbindung zwischen Blattfeder und Druckschlauch hergestellt wird. Dieser Druckschlauch ist - wie der Name es bereits sagt - hohl und in den Hohlraum des Druckschlauches wird ein Druckmedium eingeführt, und zwar über einen Druckerzeuger, wobei dieses Medium ein Gas, z. B. Luft oder eine Flüssigkeit, z. B. Öl ist. Durch das Einblasen unter entsprechend hohem Druck dieses Druckmediums in das Innere des Schlauches wird der Schlauch und damit auch die Blattfeder gelängt und ausgeklappt, so daß dadurch das Spritzgestänge erstellt wird.

Auf der Tragvorrichtung können selbstverständlich mehrere aufgerollte Blattfederaggregate mit entsprechenden Druckschläuchen angeordnet sein, vorzugsweise wenigstens zwei, um ausgehend von der Tragvorrichtung nach beiden Seiten der Tragvorrichtung hin einen entsprechenden Gestängeteil ausrollen zu können.

An der Blattfeder und/oder dem Druckschlauch schließen einenendes Stabilisierungsseile an, die anderenendes an der Tragvorrichtung anschließen, so daß dadurch der ausgerollte Druckschlauch zusammen mit der Blattfeder in der gewünschten horizontalen Lage gehalten wird.

An der Blattfeder und/oder an dem Druckschlauch schließen Zuführungsleitungen und Spritzdüsen für die Spritzflüssigkeit an, wobei also der eigentliche Druckschlauch nicht die Spritzflüssigkeit aufnimmt.

In den eigentlichen Druckschlauch können in bestimmten Abschnitten Ventile eingebaut werden, so daß es möglich ist, den Druckschlauch nur über eine gewisse Länge zu längen und damit auch die Blattfeder nur um eine gewisse Länge aufzurollen, so daß damit unterschiedliche Breiten mit der Feldspritze bearbeitet werden können.

Wesentllich bei der erfindungsgemäßen Einrichtung ist, daß der Druckschlauch so an der Blattfeder angeordnet ist, daß sich dieser Bereich des Schlauches nicht längen kann, während der obere Teil des Schlauches, also der nicht mit der Blattfeder unmittelbar verbundene Teil des Schlauches, elastisch bleibt und durch Einblasen des Druckmediums sich längen kann und damit die aufgerollte Blattfeder ab- oder aufrollen kann.

Durch entsprechendes Entspannen des Druckmediums rollt sich die Blattfeder zusammen mit dem Schlauch von selbst wieder auf, so daß hier keine weiteren zusätzlichen Hilfsmittel erforderlich sind.

In der beigefügten Zeichnung ist in
- Fig. 1: schematisch eine Anordnung dargestellt, bei der in vollen Linien die aufgerollte Blattfeder dargestellt ist und gestrichelt die abgerollte Blattfeder mit daran anschließenden Stabilisierungsseilen und in
- Fig. 2: ist ein Schnitt durch die Blattfeder mit aufvulkanisiertem Schlauch dargestellt.

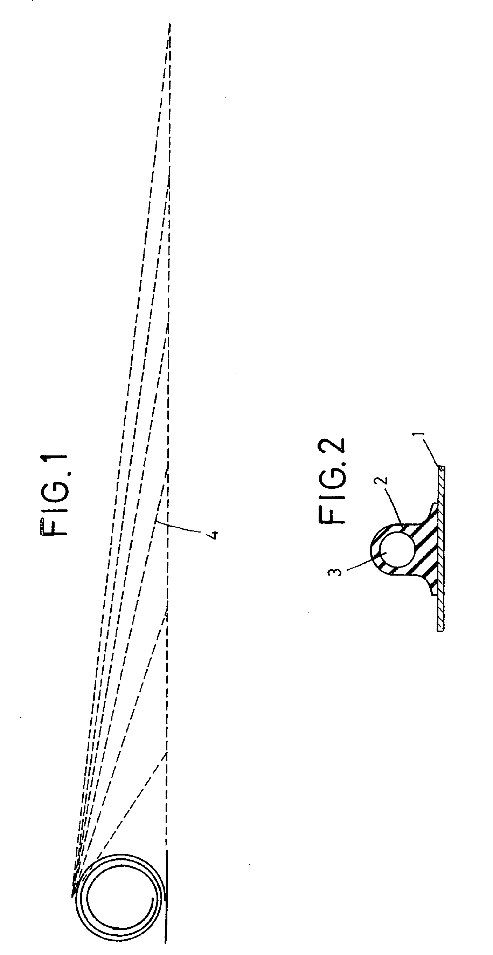

In Fig. 2 ist mit 1 eine Blattfeder dargestellt, und zwar im Schnitt, auf der aufvulkanisiert ein Schlauch 2 angeordnet ist, der einen Hohlraum 3 aufweist, in den das Druckmedium eingeführt werden kann.

In Fig. 1 sind mit 4 die Stabilisierungsseile bezeichnet.

## Patentansprüche

1. Spritzvorrichtung, z. B. Feldspritze für landwirtschaftliche Einsatzzwecke mit einem von einer Tragvorrichtung getragenen Spritzgestänge, **gekennzeichnet durch** eine einen elastischen Druckschlauch (2) fest tragende Blattfeder (1), die im Ruhezustand aufgerollt auf der Tragvorrichtung angeordnet ist und einen Druckerzeuger, der das Druckschlauchinnere (3) unter Druck setzen kann und derart den Druckschlauch (2) und damit die Blattfeder (1) entrollt.

2. Vorrichtung nach Anspruch 1, **gekennzeichnet durch** mit der Blattfeder (1) und/oder dem Schlauch (2) einenendes und anderenendes mit der Tragvorrichtung verbundene Stabilisierungsseile (4).

3. Vorrichtung nach Anspruch 1 oder 2, **dadurch gekennzeichnet, daß** die Blattfeder (1) und/oder der Schlauch (2) mit Zuführungsleitungen und Spritzdüsen für die Spritzflüssigkeit ausgerüstet sind.

4. Vorrichtung nach einem der vorhergehenden Ansprüche, **dadurch gekennzeichnet, daß** auf der Tragvorrichtung mehrere, d. h. mindestens zwei aufrollbare Blattfedern mit fest angeordneten Druckschläuchen angeordnet sind.

5. Vorrichtung nach Anspruch 1, **dadurch gekennzeichnet, daß** ein hydraulischer Druckerzeuger vorgesehen ist.

6. Vorrichtung nach einem oder mehreren der vorhergehenden Ansprüche, **dadurch gekennzeichnet, daß** der Druckschlauch (2) auf der Blattfeder (1) aufvulkanisiert ist.
